# EUROPÄISCHE PATENTSCHRIFT

(11) **EP 2 533 967 B1**
(45) Veröffentlichungstag und Bekanntmachung des Hinweises auf die Patenterteilung: **03.04.2019**
(21) Anmeldenummer: 11701004.1
(22) Anmeldetag: 17.01.2011
(51) Int. Cl.: B29C 63/02

(54) **ANORDNUNG, UMFASSEND EINE ABDECKEINRICHTUNG SOWIE EIN PROFILELEMENT ODER EIN FORMTEIL**
ASSEMBLY COMPRISING A COVERING DEVICE AND A PROFILED ELEMENT OR A MOLDED PART
SYSTÈME COMPRENANT UN DISPOSITIF DE RECOUVREMENT ET UN ÉLÉMENT PROFILÉ OU UNE PIÈCE MOULÉE

(30) Priorität: 10.02.2010 DE 102010007678
(43) Veröffentlichungstag der Anmeldung: 19.12.2012
(73) Patentinhaber: Rehau AG + Co, 95111 Rehau (DE)
(72) Erfinder: KÖGLER, Wolfgang, 85131 Preith (DE)
(86) Internationale Anmeldenummer: PCT/EP2011/000174
(87) Internationale Veröffentlichungsnummer: WO 2011/098203

(56) Entgegenhaltungen:
- DE-C1- 4 442 670
- GB-A- 2 033 947
- US-A- 3 358 355
- US-B1- 6 534 144

## Beschreibung

Die Erfindung betrifft eine Anordnung, umfassend eine vorzugsweise folienartige Abdeckeinrichtung und ein Profilelement oder Formteil, wobei die Abdeckeinrichtung eine Oberfläche des Profilelements oder Formteils verdeckt und mit dem Profilelement oder Formteil zumindest abschnittsweise in Verbindung steht, wobei eine Verbindungsstärke zwischen der Abdeckeinrichtung und dem Profilelement oder Formteil in einem ersten Bereich größer ist als in einem zweiten Bereich.
In der Kantenbandfertigung, wo Profilelemente oder Formteile in Gestalt von Kantenbänder hergestellt werden, werden auf sehr empfindliche Dekoroberflächen sogenannte Schutzfolien als Abdeckeinrichtung aufgebracht. Diese Schutzfolien haben die Aufgabe, die Oberfläche beim Transport als auch bei der Verarbeitung des Kantenbandes vor Beschädigung zu schützen. Bei diesen Schutzfolien handelt es sich um sehr dünne Folien, die einseitig eine vollflächige leicht klebrige Oberfläche aufweisen. Diese klebrige Oberfläche wird auf die zu schützende Oberfläche aufgebracht, um eine gattungsgemäße Anordnung zu bilden. Es hat sich bei der gattungsgemäßen Anordnung als schwierig herausgestellt, die Abdeckeinrichtung nach Erfüllung ihrer Aufgabe, insbesondere nach langen Lagerzeiten, wieder von dem Profilelement oder Formteil zu entfernen.

Der Erfindung liegt die Aufgabe zugrunde, eine Möglichkeit aufzuzeigen, um die Abdeckeinrichtung und das Profilelement oder Formteil auch nach langen Lagerzeiten gut voneinander trennen zu können.

Zur Lösung dieser Aufgabe stellt die Erfindung die Anordnung nach Anspruch 1 bereit. Weitere vorteilhafte Ausgestaltungen sind in den Unteransprüchen beschrieben.

Die erfindungsgemäße Anordnung umfasst: eine vorzugsweise folienartige Abdeckeinrichtung und ein Profilelement oder Formteil, wobei die Abdeckeinrichtung eine Oberfläche des Profilelements oder Formteils verdeckt und mit dem Profilelement oder Formteil zumindest abschnittsweise in Verbindung steht, wobei eine Verbindungsstärke zwischen der Abdeckeinrichtung und dem Profilelement oder Formteil in einem ersten Bereich (der verdeckten Oberfläche) größer ist als in einem zweiten Bereich (der verdeckten Oberfläche).

Die US 3,358,355 A offenbart ein Verfahren zum Aufbringen einer Schutzfolie auf ein Profilelement, wobei diese Abdeckfolie eine Oberfläche des Profielements oder des Formteils verdeckt und mit dem Profilelement oder Formteil zumindest abschnittsweise in Verbindung steht, wobei eine Verbindungsstärke zwischen der Abdeckfolie und dem Profilelement oder Formteil in einem ersten Bereich größer ist als in einem zweiten Bereich. Es wird weiterhin offenbart, eine beheizte Rolle, die über die Abdeckfolie bewegt wird und den an der Folie angeordneten Kleber thermisch aktiviert, so dass dieser die Abdeckfolie und das Profilelement oder Formteil adhäsiv verbindet. Dabei wird weiterhin gezeigt, dass beispielsweise in Profillängsrichtung an den Kanten jeweils ein Rand entsteht, an dem die beheizte Rolle den Kleber nicht aktiviert, so dass der Kleber zwar vorhanden aber die Folie nicht auf dem Formteil adhäsiv angeheftet ist. Es wird ebenfalls offenbart eine beheizbare Andruckrolle, die über ihren gesamten Querschnitt etwa 45° zueinander versetzte Rillen aufweist, die dazu dienen, dass der an der Abdeckfolie angeordnete Kleber in diesem Rillenbereich thermisch nicht aktiviert werden soll.

Die DE 4442670 C1 beschreibt ein Verfahren zum Auftragen von Selbstklebefolien auf Kraftfahrzeuge, wobei vor dem Bekleben des Kraftfahrzeuges mit der Selbstklebefolie ein Trennmittel flächig auf die mit der Selbstklebefolie zu beklebende Oberfläche auftragen wird, wobei die Randbereiche und einzelne Bereiche vom Trennmittelauftrag ausgespart bleiben. Diese Selbstklebefolie soll so auf die Oberfläche aufgebracht werden, dass die beim Aufkleben zwangsläufig entstehenden Luftblasen nicht entstehen und das die Selbstklebefolie aufgrund der geringen Anfangshaftung optimal auf die Oberfläche angeordnet und auf dieser fixiert werden kann.

Die ersten und zweiten Bereiche sind Teilbereiche der verdeckten Oberfläche des Profilelements oder Formteils. Die verdeckte Oberfläche ist mit einer Beschichtung, Farbe, Folie vorzugsweise mit einem Dekor, bevorzugt mit einem aufgedruckten Dekor versehen und wird vor der bestimmungsgemäßen Montage des Profilelements oder Formteils durch die Abdeckeinrichtung insbesondere vor Umgebungseinflüssen wie mechanischer Einwirkung, Oxidation oder UV-Licht geschützt.

Die Abdeckeinrichtung wird vorzugsweise erst nach der bestimmungsgemäßen Montage des Profilelements oder Formteils abgenommen, nachdem die gesamte Anordnung für den bestimmungsgemäßen Anwendungsfall insbesondere spanabhebend bearbeitet wurde.

Hierdurch kann die Abdeckeinrichtung sehr leicht und schnell entfernt werden. Das mühsame und zeitintensive Abfummeln der Abdeckeinrichtung kann entfallen.

Eine Beeinträchtigung der Schutzfunktion der Abdeckeinrichtung ist zu keinem Zeitpunkt gegeben. Bei der Realisierung der erfindungsgemäßen Anordnung ist eine Vielzahl von Varianten denkbar.

So kann z.B. eine zusätzliche Einlage in der Gestalt einer Folie oder eines Bandes unter die Abdeckeinrichtung gelegt werden bzw. zwischen der Abdeckeinrichtung und dem Profilelement oder Formteil angeordnet werden.

Weiterhin ist es denkbar, das als Klebstoff ausgebildete Verbindungselement nicht über die gesamte Fläche auf die Abdeckeinrichtung aufzubringen, sondern nur in bestimmten Mustern, z.B. in Längsstreifen, Querstreifen, Diagonalstreifen und dergleichen.

Auch eine Deaktivierung des als Klebstoff ausgebildete Verbindungselementes in der Fertigung, bspw. beim Aufbringen der Abdeckeinrichtung auf das Profilelement oder Formteil wäre denkbar, um diesen Effekt zu realisieren.

In Betracht kommen sämtliche Anwendungen geeignet, bei welchen eine Abdeckeinrichtung eine Oberfläche eines Profilelements oder Formteils verdeckt. Beispielsweise kann bei Profilelementen oder Formteilen in Gestalt von Kantenbänder das Abziehen der Schutzfolie erleichtert werden, wenn die Schutzfolie Bereiche mit und ohne als Klebstoff ausgebildete Verbindungselemente aufweist, wobei diverse Fehlstellen einerseits durch Nichtbeschichten, aber auch durch Anbringen bzw. Aufbringen einer zusätzlichen Folie oder nachträgliches Abtragen oder Deaktivieren des als Klebstoff ausgebildete Verbindungselement an ausgewählten Stellen erzeugt werden können. Die Abdeckeinrichtung ist vorzugsweise rückstandsfrei von dem Profilelement oder Formteil ablösbar.

Es kann sich als vorteilhaft erweisen, wenn die Abdeckeinrichtung und das Profilelement oder Formteil im ersten Bereich miteinander verbunden sind und im zweiten Bereich voneinander beabstandet sind, vorzugsweise durch ein Trennmittel oder -element, das zwischen der Abdeckeinrichtung und dem Profilelement oder Formteil angeordnet ist. Dadurch kann die Abdeckeinrichtung im zweiten Bereich leicht in Eingriff genommen und abgezogen werden.

Es kann sich als nützlich erweisen, wenn der zweite Bereich zwischen der Abdeckeinrichtung und dem Profilelement oder Formteil kein als Klebstoff ausgebildetes Verbindungselement aufweist. Dadurch können die erforderlichen Abziehkräfte noch weiter verringert werden.

Es kann praktisch sein, wenn die Abdeckeinrichtung im zweiten Bereich gegenüber dem Profilelement oder Formteil bewegbar ist. Durch leichtes Rubbeln an der Oberfläche der Abdeckeinrichtung entsteht eine Lasche, durch welche die Abdeckeinrichtung besonders leicht in Eingriff genommen und abgezogen werden kann.

Es hat sich als vorteilhaft in der Herstellung und kostengünstig in der Beschaffung herausgestellt, dass das Verbindungselement als Klebstoff, doppelseitiges Klebeband und dgl. ausgebildet ist.

In einer bevorzugten Ausführungsform ist ein zwischen der Abdeckeinrichtung und dem Profilelement oder Formteil angeordnetes, als Klebstoff ausgebildetes Verbindungselement, im zweiten Bereich abgetragen, abgedeckt oder deaktiviert, vorzugsweise bedruckt, lackiert, oder mit einem Trennmittel oder -element wie Lack, Fett oder Farbstoff beaufschlagt. Diese Ausführungsform vereinfacht die Herstellung einer erfindungsgemäßen Anordnung erheblich, da zunächst ein Klebstoff vollflächig auf die Abdeckeinrichtung oder das Profilelement oder Formteil aufgetragen und nachträglich derart behandelt werden kann, dass die Klebewirkung zwischen der Abdeckeinrichtung und dem Profilelement oder Formteil gezielt und bereichsweise herabgesetzt oder aufgehoben ist. Vorzugsweise wird der Klebstoff vollflächig in ersten und zweiten Abschnitten auf zumindest eine Seite der Abdeckeinrichtung aufgebracht und nachträglich im zweiten Abschnitt wieder abgetragen, abgedeckt oder deaktiviert bzw. bedruckt, lackiert, oder mit einem Trennmittel oder -element wie Lack, Fett oder Farbstoff beaufschlagt.
Der deaktivierte Teil kann dabei vorteilhafterweise mit einem Dekorelement wie einer Beschichtung, Farbe, Folie und dgl. versehen sein, so dass dieser Teil optisch für jeden Dritten gut erkennbar und somit leicht entfernbar ist.

Dabei kann das Trennmittel oder -element direkt auf die klebende bzw. mit Klebstoff beaufschlagte Seite der Abdeckeinrichtung oder auf die durch die Abdeckeinrichtung zu verdeckende Oberfläche des Profilelements oder Formteils aufgebracht werden, wo das Trennmittel oder -element mit dem Klebstoff in Kontakt gelangt.
In beiden Fällen wird die Klebewirkung zwischen der Abdeckeinrichtung und dem Profilelement oder Formteil bereichsweise (im zweiten Bereich) herabgesetzt oder aufgehoben. Das Trennmittel oder -element kann vorzugsweise eine farbige Bedruckung sein oder umfassen, eine lesbare Codierung enthalten, beispielsweise den Namen oder Kenndaten des Herstellers oder des hergestellten Produkts.
Damit das Trennmittel oder-element auch im Anordnungszustand von außen sichtbar ist (d.h. vor dem Abziehen der Abdeckeinrichtung) ist die Abdeckeinrichtung vorzugsweise zumindest abschnittsweise transparent oder transluzent ausgebildet.

In einer bevorzugten Ausführungsform der Erfindung ist der Klebstoff an einer Seite der Abdeckeinrichtung und/oder des Profilelementes bzw. des Formteiles angebracht. Bevorzugt ist die Abdeckeinrichtung und/oder das Profilelement bzw. das Formteil zumindest einseitig mit einer Klebstoffbeschichtung versehen bzw. mit Klebstoff beschichtet.
Bei dieser Ausführung ist zur Verbindung der Abdeckeinrichtung und dem Profilelement oder Formteil kein gesonderter Klebstoff, insbesondere kein flüssiger Klebstoff, heranzuziehen.

Es kann von Vorteil sein, wenn die Abdeckeinrichtung und/oder das Profilelement bzw. das Formteil, vorzugsweise an der mit Klebstoff versehenen Seite, zwei Bereiche mit unterschiedlichen Hafteigenschaften aufweist. Somit sind bei der Verbindung der Abdeckeinrichtung mit dem Profilelement oder Formteil keine zusätzlichen Maßnahmen mehr zu ergreifen, um die Klebewirkung zwischen der Abdeckeinrichtung und dem Profilelement oder Formteil bereichsweise (im zweiten Bereich) herabzusetzen oder aufzuheben.

Es kann nützlich sein, wenn die Abdeckeinrichtung im ersten Bereich klebriger ist als im zweiten Bereich, der vorzugsweise nicht klebrig ist. Alternativ können die Abdeckeinrichtung und das Profilelement oder Formteil durch andere Verbindungstechniken als Kleben verbunden werden. Die Abdeckeinrichtung und das Profilelement oder Formteil sind vorzugsweise lediglich stoffschlüssig und/oder durch nicht-invasive Verbindungstechniken bzw. -mittel verbunden, welche die verdeckte Oberfläche nicht schädigen, bspw. durch elektrostatische oder elektromagnetische Wechselwirkungen.

Es kann vorteilhaft sein, wenn die Abdeckeinrichtung und/oder das Profilelement bzw. das Formteil im zweiten Bereich klebstofffrei ist. Dadurch lässt sich die Abdeckeinrichtung besonders einfach von dem Profilelement oder Formteil lösen.

Es kann sich als nützlich erweisen, wenn die Abdeckeinrichtung zwei Abschnitte aufweist, die in Richtung der Dicke der Abdeckeinrichtung versetzt zueinander angeordnet sind. Dadurch steht einer der Abschnitte weiter in Richtung des Profilelements oder Formteils hervor als der andere Abschnitt, der naturgemäß nicht oder nicht vollständig mit dem Profilelement oder Formteil in Kontakt gelangt. Vorzugsweise weist bei dieser Ausführung nur der weiter in Richtung des Profilelements oder Formteils hervorstehende Abschnitt (erhabener Abschnitt) einen Klebstoff (und damit unterschiedliche Hafteigenschaften als der andere Abschnitt) auf. Der Klebstoff wird vorzugsweise mittels einer Rolle oder dergleichen aufgetragen und gelangt vorzugsweise nicht auf einen vertieften Abschnitt, der gegenüber dem erhabenen Abschnitt nach hinten versetzt ist und im Montagezustand der Anordnung weiter von der verdeckten Oberfläche des Profilelements oder Formteils beabstandet ist. Selbst wenn der Klebstoff sowohl auf den erhabenen Abschnitt als auch auf den vertieften Abschnitt gelangt, befindet sich der vertiefte Abschnitt in gewissem Abstand von der verdeckten Oberfläche des Profilelements oder Formteils, was für eine bereichsweise Herabsetzung, Unterbrechung oder Aufhebung der Klebewirkung zwischen der Abdeckeinrichtung und dem Profilelement oder Formteil im zweiten Bereich sorgt.

Es kann von Vorteil sein, wenn die Abdeckeinrichtung und/oder das Profilelement bzw. das Formteil ein Substrat aus bspw. Kunststoff und/ oder Metall und/oder Keramik und/oder Duromer aufweist und vorzugsweise im Wesentlichen bandförmig oder mattenförmig ausgebildet ist. Derartige Materialien und Formen sind gut zu verarbeiten und leicht handhabbar.

Vorzugsweise ist die die Abdeckeinrichtung transparent oder transluzent und/oder ist als klebende Schutzfolie ausgebildet. Dadurch kann ein zwischen der Abdeckeinrichtung und dem Profilelement oder Formteil angeordnetes Trennmittel oder -element als von außen sichtbares Dekorelement und/oder als von außen sichtbarer Informationsträger genutzt werden.

In einer weiteren vorteilhaften Ausgestaltung erfüllt der erste Bereich und/ oder der zweite Bereich zumindest eine der folgenden Anforderungen:
- Der Bereich wiederholt sich in einem regelmäßig wiederkehrenden Muster.
- Der Bereich verläuft im Wesentlichen in oder quer zu der Erstreckungsrichtung der Anordnung.
- Der Bereich verläuft im Wesentlichen schräg zu der Erstreckungsrichtung der Anordnung in einem Winkel von 10 bis 80°, vorzugsweise 20 bis 70°, bevorzugt 30 bis 50° zur Erstreckungsrichtung der Anordnung.
- Der Bereich reicht bis an einen Längsrand und/oder einen Seitenrand der Anordnung.
- Der Bereich ist beabstandet zu einem Längsrand (LR) und/oder einem Seitenrand (SR) der Anordnung.
- Der Bereich ist im Wesentlichen linienförmig, bandförmig, streifenfömig, gitterförmig, netzförmig und dgl. ausgebildet.
- Der Bereich weist eine Breite von 1 bis 10 mm, vorzugsweise von 2 bis 8 mm, bevorzugt von 2 bis 4 mm auf.
- Der Bereich umfasst eine Vielzahl voneinander beabstandeter Teilbereiche.
- Der Bereich ist von einem anderen Bereich umgeben.
- Das Verhältnis der Fläche des Bereichs zu der verdeckten Oberfläche beträgt 1 bis 50 %, vorzugsweise 2 bis 25 %, bevorzugt 3 bis 10 %

Die Bereiche können dabei auch voneinander unterschiedliche Dekore bzw. dekorelemente aufweisen, um die Unterschiede besser sichtbar zu machen zu können.

Die Aufgabe der Erfindung wird ebenfalls gelöst durch ein Verfahren nach Anspruch 5.

Die Reihenfolge der Arbeitsschritte oder Teilschritte ist hierbei nicht bindend, da das Aktivieren des Klebstoffs im ersten Bereich oder das Abtragen, Abdecken oder Deaktivieren des Klebstoffes im zweiten Bereich ggf. auch erst nach dem Aufbringen der Abdeckeinrichtung auf das Profilelement oder Formteil erfolgen kann, beispielsweise durch Beaufschlagung mit Laserstrahlung durch eine transparente Abdeckeinrichtung hindurch.

Es kann sich als vorteilhaft erweisen, wenn der Klebstoff im zweiten Bereich einer thermischen und/oder mechanischen und/oder chemischen Behandlung unterzogen wird, vorzugsweise mit Laserstrahlung beaufschlagt wird, oder mit einem Trennmittel oder - element wie Lack, Fett oder Farbstoff beaufschlagt wird.

### Kurze Beschreibung der Zeichnungen:

- Fig. 1: zeigt in Teilansichten (a), (b) und (c) verschiedene Aspekte eines Verfahrens zur Herstellung einer Anordnung.
- Fig. 2: zeigt eine Schnittansicht einer erfindungsgemäßen Anordnung gemäß einem anderen Ausführungsbeispiel.
- Fig. 3: zeigt eine Schnittansicht einer erfindungsgemäßen Anordnung gemäß einem weiteren Ausführungsbeispiel.
- Fig. 4: zeigt eine perspektivische Ansicht einer erfindungsgemäßen Anordnung gemäß einem weiteren Ausführungsbeispiel.

### Detaillierte Beschreibung der bevorzugten Ausführungsbeispiele

### Erstes Ausführungsbeispiel

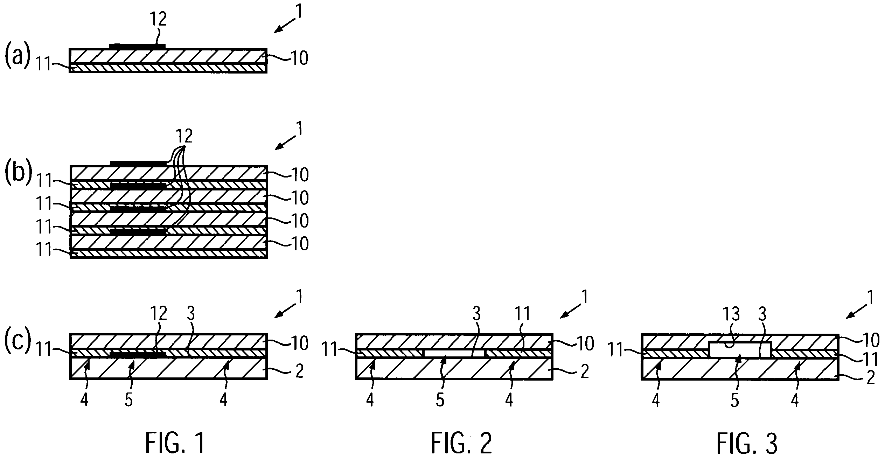

Fig. 1 zeigt in Teilansichten (a), (b) und (c) verschiedene Aspekte eines Verfahrens zur Herstellung einer Anordnung.

Teilansicht (a) zeigt eine Abdeckeinrichtung 1, die ein Substrat 10 mit unterseitiger Klebstoffbeschichtung 11 und oberseitiger, partieller Trennmittelbeschichtung 12 aufweist.

Das Substrat 10 ist vorzugsweise eine flexible, transparente, selbstklebende Schutzfolie, die im Wesentlichen bandförmig oder mattenförmig aus Kunststoff und/ oder Metall ausgebildet ist. Die Trennmittelbeschichtung 12 auf der Oberfläche des Substrats 10 dient der Erzeugung des zweiten Bereichs 5 der Anordnung und zielt darauf ab, die Klebewirkung zwischen der Abdeckeinrichtung 1 und dem Profilelement oder Formteil 2 im zweiten Bereich 5 herabzusetzen oder aufzuheben. Die Trennmittelbeschichtung 12 wird vorzugsweise entweder in Längsrichtung oder in einem spitzen Winkel zur Längsrichtung in Form von Lack, Trennmittel, Folie oder in Form eines festen Elements aufgebracht. Die in Teilansicht (a) dargestellte Abdeckeinrichtung 1 wird nun auf einer sog. Mutterrolle in Breiten von etwa 1 bis 2 m aufgewickelt und dann auf die entsprechende Breite des Profilelements oder Formteils 2 von dieser Mutterrolle abgetrennt.

Teilansicht (b) zeigt schematisch eine Schnittansicht durch eine zur Mutterrolle aufgewickelte Abdeckeinrichtung 1 nach Teilansicht (a). Sobald die mit dem Trennmittel 12 beschichtete Oberseite der Abdeckeinrichtung 1 beim Aufwickeln an die klebstoffbeschichtete Unterseite der Abdeckeinrichtung 1 gelangt, wird die Klebewirkung der Klebstoffbeschichtung 11 lokal herabgesetzt oder aufgehoben und es entsteht dort eine gewünschte Fehlstelle. Die Trennmittelbeschichtung 12, beispielsweise der Lack, deckt den Klebstoff 11 ab, so dass diese Stelle später nicht mehr auf dem Profilelement oder Formteil 2 klebt. Dadurch weist die Abdeckeinrichtung 1 an ihrer Unterseite zwei Bereiche mit unterschiedlichen Hafteigenschaften auf, wobei die Abdeckeinrichtung 1 im ersten Bereich klebriger ist als im zweiten Bereich. Die Erzeugung der Trennmittelbeschichtung 12 auf der Mutterrolle ist derart gestaltet, dass bei unterschiedlichen Querschnitten der Abdeckeinrichtung 1 jeweils die entsprechende prozentuale Menge der zweiten Bereiche 5 bzw. Fehlstellen (ca. 5 %) bezogen auf die Gesamtfläche der Abdeckeinrichtung 1 (=100 %) gegeben ist.

Teilansicht (c) zeigt eine Schnittansicht der erfindungsgemäßen Anordnung unter Verwendung der Abdeckeinrichtung 1 nach Teilansicht (b).
Die Abdeckeinrichtung 1 verdeckt eine Oberfläche 3 des Profilelements oder Formteils 2 und steht mit dem Profilelement oder Formteil 2 zumindest abschnittsweise in Verbindung. Eine Verbindungsstärke zwischen der Abdeckeinrichtung 1 bzw. dem Substrat 10 und dem Profilelement oder Formteil 2 ist in dem ersten Bereich 4, in welchem die Abdeckeinrichtung 1 und das Profilelement oder Formteil 2 verklebt sind, größer als in einem zweiten Bereich 5, in welchem die Klebewirkung der Klebstoffbeschichtung 11 durch die Trennmittelbeschichtung 12 herabgesetzt oder aufgehoben ist. Ferner sind die Abdeckeinrichtung 1 und das Profilelement oder Formteil 2 im zweiten Bereich 5 durch die Trennmittelbeschichtung 12 voneinander beabstandet, so dass die Abdeckeinrichtung 1 im zweiten Bereich 5 leicht von dem Profilelement oder Formteil 2 abgehoben werden kann.

### Zweites Ausführungsbeispiel

Das oben beschriebene Prinzip lässt sich auch in umgekehrter Weise auf das zu beklebende Profilelement oder Formteil anwenden.

Nach dem zweiten Ausführungsbeispiel, das nicht in den Figuren dargestellt ist, wird das beispielsweise als Kantenband ausgebildete Profilelement oder Formteil auf der zu verdeckenden Oberfläche bereichsweise mit einer Trennmittelbeschichtung in Form von Lack, Trennmittel, Folie oder in Form eines festen Elements versehen.

Anschließend wird die unterseitig vollflächig mit Klebstoff beschichtete Abdeckeinrichtung von einer Mutterrolle abgewickelt und auf das Profilelement oder Formteil aufgebracht. Die Klebewirkung der Klebstoffbeschichtung der Abdeckeinrichtung wird durch die Trennmittelbeschichtung auf dem Profilelement oder Formteil herabgesetzt oder aufgehoben, so dass entsprechende Fehlstellen erzeugt werden und eine Verbindungsstärke zwischen der Abdeckeinrichtung und dem Profilelement oder Formteil in einem ersten Bereich größer ist als in einem zweiten Bereich.

### Drittes Ausführungsbeispiel

Nach dem dritten Ausführungsbeispiel, das in Figur 2 dargestellt ist, werden bei der Herstellung der Anordnung bereits beim Klebstoffauftrag 11 entsprechende Fehlstellen vorgesehen, indem beispielsweise die Rolle, mit der der Klebstoff 11 aufgetragen wird, eine Aussparung aufweist, oder die mit dem Klebstoff zu beschichtende Fläche der Abdeckeinrichtung 1 oder des Profilelements oder Formteils 2 derart vorbehandelt wird (oder eben nicht), so dass der später aufzubringende Klebstoff 11 an dieser Stelle der nicht haftet und so die Fehlstelle erzeugt ist.

Dadurch weist die Abdeckeinrichtung 1, welche die Oberfläche 3 des Profilelements oder Formteils 2 verdeckt, zwei Abschnitte auf, die unterschiedliche Hafteigenschaften aufweisen, und steht mit dem Profilelement oder Formteil 2 nur im ersten Bereich 4, in welchem der Klebstoff 11 vorliegt, in Verbindung, während die Abdeckeinrichtung 1 und das Profilelement oder Formteil 2 im klebstofffreien zweiten Bereich voneinander beabstandet und bewegbar sind, so dass die Abdeckeinrichtung 1 leicht abgehoben werden kann.

Eine Verbindungsstärke zwischen der Abdeckeinrichtung 1 und dem Profilelement oder Formteil 2 ist somit im ersten Bereich 4 größer als im klebstofffreien zweiten Bereich 5.

### Viertes Ausführungsbeispiel

Nach dem vierten Ausführungsbeispiel, das in Figur 3 dargestellt ist, wird die Fehlstelle durch mechanische, thermische oder chemische Behandlung des Klebstoffs 11, beispielsweise durch Laserbeaufschlagung, erzeugt.

Dabei wird der Klebstoff 11, bspw. die unterseitige Klebstoffbeschichtung 11 der Abdeckeinrichtung 1 und ggf. auch ein Teil der Abdeckeinrichtung 1 entfernt, um eine Aussparung 13 zu erzeugen. Dadurch weist die Abdeckeinrichtung 1 zwei Abschnitte auf, die in Richtung der Dicke der Abdeckeinrichtung 1 versetzt zueinander angeordnet sind und unterschiedliche Hafteigenschaften aufweisen. In der bestimmungsgemäßen Anordnung verdeckt die Abdeckeinrichtung 1 die Oberfläche 3 des Profilelements oder Formteils 2 und steht mit dem Profilelement oder Formteil 2 nur im ersten Bereich 4, in welchem der Klebstoff 11 vorliegt, in Verbindung, während die Abdeckeinrichtung 1 und das Profilelement oder Formteil 2 im zweiten Bereich 5 voneinander beabstandet und bewegbar sind, so dass die Abdeckeinrichtung 1 leicht abgehoben werden kann.

Eine Verbindungsstärke zwischen der Abdeckeinrichtung 1 und dem Profilelement oder Formteil 2 ist somit im ersten Bereich 4 größer als im klebstofffreien zweiten Bereich 5.

### Fünftes Ausführungsbeispiel

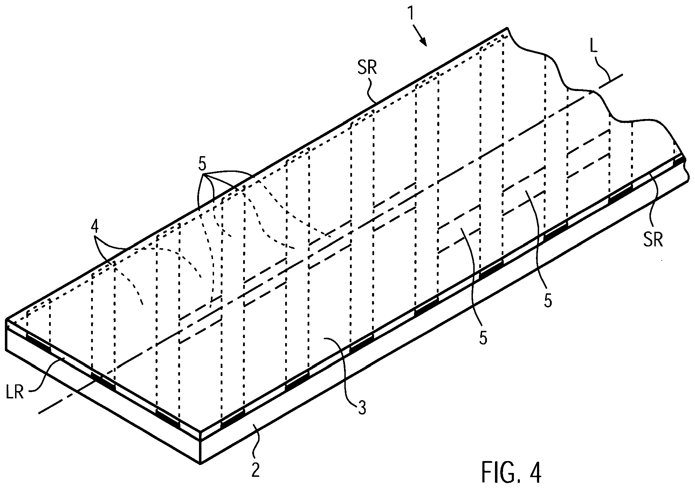

In der bevorzugten Ausführung gemäß Fig. 4 ist der zweite Bereich 5 im Wesentlichen linienfömig mit einer Breite von ca. 2 bis 4 mm ausgebildet und erstreckt sich im spitzen Winkel bzw. schräg zur Erstreckungsrichtung L der Anordnung zwischen den parallelen Seitenrändern SR der Anordnung, wobei der zweite Bereich 5 von und bis zu den Seitenrändern SR reicht.

In diesem Ausführungsbeispiel sind die zweiten Bereiche 5 durch die ersten Bereiche 4 voneinander parallel beabstandet angeordnet, wobei etwa in der Mitte des Profilelementes oder Formteiles 2 die zweiten Bereichen 5 über einen Streifen, welcher etwa parallel zur Erstreckungsrichtung L der Anordnung verläuft, miteinander verbunden sind.

Es liegt jedoch auch im Rahmen der Beschreibung, dass die zweiten Bereiche 5 über ein oder mehrere streifenförmige Bereiche miteinander verbunden sind, hierdurch lässt sich die Haftkraft der an der verdeckten Oberfläche 3 des Profilelements oder Formteils 2 angeordneten Abdeckeinrichtung 1 nochmals optimieren.

Dadurch ist es möglich, jeweils an den Seitenrändern SR der Anordnung bzw. an den Längsrändern LR des Profilelements oder Formteils 2 die Abdeckeinrichtung 1 an der Fehlstelle im zweiten Bereich 5 beginnend abzuziehen. Die Fläche des zweiten Bereichs 5 bezogen auf die von der Abdeckeinrichtung 1 verdeckte Oberfläche 3 des Profilelements oder Formteils 2 beträgt im Verhältnis ca. 5 %. Im Ergebnis ist die Abdeckeinrichtung 1 in den ersten Bereichen 4 partiell mit der verdeckten Oberfläche 3 des Profilelements oder Formteils 2 verklebt, wobei eine Verbindungsstärke zwischen der Abdeckeinrichtung 1 und dem Profilelement oder Formteil 2 in den ersten Bereichen 4 größer ist als in den zweiten Bereichen 5.

Durch verschiedenartige Maßnahmen sind unterschiedlichste Ausgestaltungen der ersten und zweiten Bereiche 4, 5 möglich, wobei die ersten und/oder zweiten Bereiche 4, 5:
- sich in einem regelmäßig wiederkehrenden Muster wiederholen können;
- längs, quer oder schräg zu der Erstreckungsrichtung der Anordnung verlaufen können;
- bis an einen Längsrand LR und/oder einen Seitenrand SR der Anordnung reichen und/oder sich durchgehend zwischen zwei Rändern LR, SR der Anordnung erstrecken können;
- in beliebiger Form, vorzugsweise rund, eckig, kreisförmig oder sternförmig ausgebildet sein können;
- ein Muster mit lesbarer Codierung umfassen oder bilden können, insbesondere eine Buchstaben und/oder Zahlenfolge;
- linienförmig, bandförmig oder streifenfömig ausgebildet sein können;
- eine Vielzahl voneinander beabstandeter Teilbereiche umfassen können.

Bevorzugte Weiterbildungen ergeben sich durch Kombinationen der vorstehend genannten Merkmale.

Die Abdeckeinrichtung 1 und die verdeckte Oberfläche 3 des Profilelements oder Formteils 2 können über beliebige Verbindungstechniken, -arten und/oder -mittel in Verbindung stehen, solange eine Verbindungsstärke zwischen der Abdeckeinrichtung 1 und dem Profilelement oder Formteil 2 in einem ersten Bereich 4 größer ist als in einem zweiten Bereich 5. Bevorzugt werden stoffschlüssige und/oder nicht-invasive Verbindungstechniken, durch welche die verdeckte Oberfläche 3 des Profilelements oder Formteils 2 nicht verletzt oder geschädigt wird, bspw. Verbindungen durch elektrostatische oder elektromagnetische Wechselwirkung, gewählt.

## Patentansprüche

1. Anordnung, umfassend eine folienartige Abdeckeinrichtung (1) und ein Profilelement oder Formteil (2), wobei die Abdeckeinrichtung (1) eine Oberfläche (3) des Profilelements oder Formteils (2) verdeckt und mit dem Profilelement oder Formteil (2) zumindest abschnittsweise in Verbindung steht, wobei eine Verbindungsstärke zwischen der Abdeckeinrichtung (1) und dem Profilelement oder Formteil (2) in einem ersten Bereich (4) größer ist als in einem zweiten Bereich (5), **dadurch gekennzeichnet, dass** die Abdeckeinrichtung (1) und das Profilelement oder Formteil (2) im ersten Bereich (4) über ein Verbindungselement (11) miteinander verbunden sind und im zweiten Bereich (5) voneinander beabstandet sind, dass die Abdeckeinrichtung (1) und/oder das Profilelement oder Formteil (2) im zweiten Bereich (5) klebstofffrei ist, dass der Bereich (4, 5) bis an einen Längsrand (LR) und/oder einen Seitenrand (SR) der Anordnung reicht und/oder sich durchgehend zwischen zwei Rändern LR, SR der Anordnung erstrecken kann, dass ein zwischen der Abdeckeinrichtung (1) und dem Profilelement oder Formteil (2) angeordnetes Verbindungselement (11) im zweiten Bereich (5) abgetragen, abgedeckt oder deaktiviert ist, vorzugsweise (5) bedruckt, lackiert, oder mit einem Trennmittel (12) oder -element wie Lack, Fett oder Farbstoff beaufschlagt ist.

2. Anordnung nach Anspruch 1, **dadurch gekennzeichnet, dass** das Verbindungselement (11) an einer Seite der Abdeckeinrichtung (1) und/oder dem Profilelement oder Formteil (2) angebracht ist.

3. Anordnung nach einem der vorangegangenen Ansprüche, **dadurch gekennzeichnet, dass** die Abdeckeinrichtung (1) und/oder das Profilelement oder Formteil (2) an einer Seite zwei Bereiche (4, 5) mit unterschiedlichen Hafteigenschaften aufweist.

4. Anordnung nach einem der vorangegangenen Ansprüche, **dadurch gekennzeichnet, dass** der erste Bereich (4) und/oder der zweite Bereich (5) zumindest eine der folgenden Anforderungen erfüllt:
a. Der Bereich (4, 5) wiederholt sich in regelmäßig wiederkehrendem Muster.
b. Der Bereich (4, 5) verläuft im Wesentlichen in oder quer zu der Erstreckungsrichtung der Anordnung.
c. Der Bereich (4, 5) verläuft im Wesentlichen schräg zu der Erstreckungsrichtung der Anordnung in einem Winkel von 10 bis 80°, vorzugsweise 20 bis 70°, bevorzugt 30 bis 50° zur Erstreckungsrichtung der Anordnung.
d. Der Bereich (4, 5) ist beabstandet zu einem Längsrand (LR) und/oder einem Seitenrand (SR) der Anordnung.
e. Der Bereich (4, 5) ist im Wesentlichen linienförmig, bandförmig, streifenfömig, gitterförmig, netzförmig und dgl. ausgebildet.
f. Der Bereich (4, 5) weist eine Breite von 1 bis 10 mm, vorzugsweise von 2 bis 8 mm, bevorzugt von 2 bis 4 mm auf.
g. Der Bereich (4, 5) umfasst eine Anzahl voneinander beabstandeter Teilbereiche.
h. Der Bereich (4, 5) ist von einem anderen Bereich (5, 4) umgeben.
i. Das Verhältnis der Fläche des Bereichs (4, 5) zu der verdeckten Oberfläche (3) beträgt 1 bis 50 %, vorzugsweise 2 bis 25 %, bevorzugt 3 bis 10 %.

5. Verfahren zur Herstellung einer Anordnung nach einem der vorangegangenen Ansprüche umfassend die Schritte:
a. Bereitstellen einer Abdeckeinrichtung (1) und eines Profilelements oder Formteils (2),
b. Anordnen eines Verbindungselementes (11) an der Abdeckeinrichtung (1) und/oder dem Profilelement oder Formteil (2) in einem ersten Bereich (4) sowie in einem zweiten Bereich (5) und Abtragen, Abdecken oder Deaktivieren des Verbindungselementes (11) im zweiten Bereich (5)
c. Zusammenführen der Abdeckeinrichtung (1) und/oder des Profilelementes oder Formteiles (2).

## Claims

1. Assembly, comprising a film-like covering device (1) and a profile element or molded part (2), wherein the covering device (1) covers a surface (3) of the profile element or molded part (2) and is in communication with the profile element or molded part (2) at least in sections, wherein a connection strength between the covering device (1) and the profile element or molded part (2) in a first region (4) is greater than in a second region (5), **characterized in that** the covering device (1) and the profile element or molded part (2) are connected with one another in the first region (4) by means of a connection element (11), and are spaced from one another in the second region (5), **in that** the covering device (1) and/or the profile element or molded part (2) is free of adhesives in the second region (5), **in that** the region (4, 5) extends as far as a longitudinal edge (LR) and/or a lateral edge (SR) of the assembly, and/or can extend continuously between two edges LR, SR of the assembly, **in that** a connection element (11) arranged between the covering device (1) and the profile element or molded part (2) is removed, covered or deactivated in the second region (5), preferably (5) printed, painted or applied with a release agent (12) or element such as paint, grease or dye.

2. Assembly according to claim 1, **characterized in that** the connection element (11) is attached on a side of the covering device (1) and/or the profile element or molded part (2).

3. Assembly according to any one of the preceding claims, **characterized in that** the covering device (1) and/or the profile element or molded part (2) comprises two regions (4, 5) with different adhesive properties on one side.

4. Assembly according to any one of the preceding claims, **characterized in that** the first region (4) and/or the second region (5) fulfils at least one of the following requirements:
a. the region (4, 5) repeats at a regularly repeating pattern.
b. the region (4, 5) extends essentially in or transversally to the extension direction of the assembly.
c. the region (4, 5) extends essentially obliquely to the extension direction of the assembly at an angle of 10 to 80°, preferably 20 to 70°, preferably 30 to 50° to the extension direction of the assembly.
d. the region (4, 5) is spaced to a longitudinal edge (LR) and/or to a lateral edge (SR) of the assembly.
e. the region (4, 5) is formed essentially in the form of a line, band, strip, grid, web and the like.
f. the region (4, 5) has a width of 1 to 10 mm, preferably of 2 to 8 mm, preferably 2 to 4 mm.
g. the region (4, 5) includes a number of sub-regions which are spaced from one another.
g. the region (4, 5) is surrounded by another region (5, 4).
i. the ratio of the area of the region (4, 5) to the covered surface (3) is 1 to 50%, preferably 2 to 25%, preferably 3 to 10%.

5. Method for producing an assembly according to any one of the preceding claims, comprising the steps:
a. providing a covering device (1) and a profile element or molded part (2),
b. arranging a connection element (11) on the covering device (1) and/or the profile element or molded part (2) in a first region (4) as well as in a second region (5), and removing, covering or deactivating the connection element (11) in the second region (5),
c. joining the covering device (1) and/or the profile element or molded part (2).

## Revendications

1. Ensemble comprenant un dispositif de recouvrement (1) de type film et un élément profilé ou une pièce moulée (2), dans lequel le dispositif de recouvrement (1) recouvre une surface (3) de l'élément profilé ou de la pièce moulée (2) et est en liaison au moins par sections à l'élément profilé ou à la pièce moulée (2), dans lequel une épaisseur de liaison entre le dispositif de recouvrement (1) et l'élément profilé ou la pièce moulée (2) est plus importante dans une première zone (4) que dans une deuxième zone (5), **caractérisé en ce que** le dispositif de recouvrement (1) et l'élément profilé ou la pièce moulée (2) sont reliés entre eux dans la première zone (4) par l'intermédiaire d'un élément de liaison (11) et sont espacés les uns des autres dans la deuxième zone (5), que le dispositif de recouvrement (1) et/ou l'élément profilé ou la pièce moulée (2) sont sans colle dans la deuxième zone (5), que la zone (4, 5) va jusqu'à un bord longitudinal (LR) et/ou un bord latéral (SR) de l'ensemble et/ou peut s'étendre en continu entre deux bords LR, SR de l'ensemble, qu'un élément de liaison (11) disposé entre le dispositif de recouvrement (1) et l'élément profilé ou la pièce moulée (2) est retiré, recouvert ou désactivé dans la deuxième zone (5), de préférence (5) est imprimé, peint ou est soumis à l'action d'un agent (12) ou élément de séparation tel qu'une peinture, une graisse ou un colorant.

2. Ensemble selon la revendication 1, **caractérisé en ce que** l'élément de liaison (11) est installé au niveau d'un côté du dispositif de recouvrement (1) et/ou au niveau de l'élément profilé ou de la pièce moulée (2).

3. Ensemble selon l'une quelconque des revendications précédentes, **caractérisé en ce que** le dispositif de recouvrement (1) et/ou l'élément profilé ou la pièce moulée (2) présentent au niveau d'un côté deux zones (4, 5) avec des propriétés d'adhérence différentes.

4. Ensemble selon l'une quelconque des revendications précédentes, **caractérisé en ce que** la première zone (4) et/ou la deuxième zone (5) remplissent au moins une des exigences suivantes :
a. La zone (4, 5) se répète en un motif récurrent.
b. La zone (4, 5) s'étend sensiblement dans ou de manière transversale à la direction d'extension de l'ensemble.
c. La zone (4, 5) s'étend sensiblement de manière oblique par rapport à la direction d'extension de l'ensemble selon un angle de 10 à 80°, de préférence de 20 à 70°, de manière préférée de 30 à 50°, par rapport à la direction d'extension de l'ensemble.
d. La zone (4, 5) est espacée par rapport à un bord longitudinal (LR) et/ou à un bord latéral (SR) de l'ensemble.
e. La zone (4, 5) est réalisée de manière à présenter une forme sensiblement de ligne, de bande, de ruban, de grille, de filet et similaire.
f. La zone (4, 5) présente une largeur de 1 à 10 mm, de préférence de 2 à 8 mm, de manière préférée de 2 à 4 mm.
g. La zone (4, 5) comprend un nombre de zones partielles espacées les unes des autres.
h. La zone (4, 5) est entourée d'une autre zone (5, 4).
i. Le rapport entre la surface de la zone (4, 5) et la surface dissimulée (3) présente une valeur de 1 à 50 %, de préférence de 2 à 25 %, de manière préférée de 3 à 10 %.

5. Procédé servant à fabriquer un ensemble selon l'une quelconque des revendications précédentes, comprenant les étapes :
a. de fourniture d'un dispositif de recouvrement (1) et d'un élément profilé ou d'une pièce moulée (2) ;
b. de disposition d'un élément de liaison (11) au niveau du dispositif de recouvrement (1) et/ou de l'élément profilé ou de la pièce moulée (2) dans une première zone (4) ainsi que dans une deuxième zone (5) et de retrait, de recouvrement ou de désactivation de l'élément de liaison (11) dans la deuxième zone (5),
c. de regroupement du dispositif de recouvrement (1) et/ou de l'élément profilé ou de la pièce moulée (2).
